# EUROPEAN PATENT APPLICATION

(11) **EP 2 390 197 A1**
(43) Date of publication of application: **30.11.2011**
(21) Application number: 11168295.1
(22) Date of filing: 31.05.2011
(51) Int. Cl.: B65D 5/72, B65D 5/42, A01K 39/012, B65D 5/74

(54) **Container for containing animal food in particles**

(30) Priority: 31.05.2010 NL 2004790
(71) Applicant: Alginac B.V., 4401 NG Yerseke (NL)
(72) Inventor: Van der Endt, JanCees, 4401 NG Yerseke (NL)
(74) Representative: Groot Koerkamp, Jasper Henri

(57) **Abstract**

The invention relates to a container (100) for containing animal food in particles comprising a top part (102) at the top of the container; a first sidewall (104) at the side of the container; and a bottom part (108) at the bottom of the container; the first sidewall (104) comprising a first tearable weakened zone (150) near the bottom part enabling creating a foraging zone (150) for animals to take food from the container by tearing the first weakened zone. This allows providing a food container as sellable item and a food dispensing to allow animals foraging in one device. The container can be sealed, preserving freshness of the animal food while sitting on a shelf in a store or a storage area. The sealing can be broken by tearing the weakened area, where torn weakened area - an opening - allows animals to forage.

## Description

### FIELD OF THE INVENTION

The invention relates to the field of containers for containing animal food in particles.

### BACKGROUND OF THE INVENTION

Animal food is sold in an enormous variety of containers: plastic bags, cartons, fabric bags, plastic bottles and a lot more. The animal food is after purchase transferred to a food dispenser to allow animals to eat. This is not always perceived as convenient by a consumer.

### OBJECT AND SUMMARY OF THE INVENTION

There is a need for more convenient arrangements for containing animal food for feeding animals.

The invention provides in a first aspect a container for containing animal food in particles comprising a top part at the top of the container; a first sidewall at the side of the container; and a bottom part at the bottom of the container; the first sidewall comprising a first tearable weakened zone near the bottom part enabling creating a foraging zone for animals to take food from the container by tearing the first weakened zone.

This allows providing a food container as sellable item and a food dispensing to allow animals foraging in one device. The container can be sealed, preserving freshness of the animal food while sitting on a shelf in a store or a storage area. The sealing can be broken by tearing the weakened area, where the torn weakened area - an opening - subsequently allows animals to forage.

In an embodiment of the container according to the invention, the container is arranged to create the foraging zone by folding a part of the first sidewall adjacent to the tearable weakened zone inwardly in the container.

An advantage of this embodiment is that no waste or loose parts are created.

In a further embodiment of the container according to the invention, the part of the first sidewall adjacent to the tearable weakened zone is located above the terable weakened zone.

An advantage of this embodiment is that a large flow of animal food through the hole is prevented; an opening created by tearing the weakened zone and folding the adjacent wall part above the weakened zone inwardly or outwardly serves as a foraging platform and the bulk of the animal food in the container is kept in the container among others by virtue of the inwardly folded wall part.

Another embodiment of the container according to the invention comprises a second sidewall adjacent to the first sidewall establishing a substantially vertically oriented corner between the first sidewall and the second sidewall, wherein the first weakened zone is partially located on the first sidewall and partially located on the second sidewall.

An advantage of this embodiment is that a corner is easily folded inwardly while creating a foraging platform, without further material of the sidewall required compared to for example a flat sidewall.

Yet a further embodiment of the container according to the invention comprises a first scored line and a second scored line extending upwardly from opposite sides of the first weakened zone wherein the first scored line and the second scored line meet at the corner.

An advantage of this embodiment is that folding back the parts of the sidewalls adjacent to the torn weakened zone is more convenient.

Again another embodiment of the container according to the invention comprises a second tearable weakened zone near the bottom part.

In a second aspect, the invention provides a broadsheet for manufacturing the container according to the invention and/or embodiments thereof.

In a third aspect, the invention provides a kit of parts comprising: the container according to claim 11; and an elongated gutter element; wherein the first weakened zone and the second weakened zone are arranged to receive the elongated gutter element, the elongated gutter element tunneling through the container.

An advantage of this embodiment is that the elongated gutter element can be inserted in openings created by tearing the weakened zones, which elongated gutter element serves as foraging area as well as a place for animals and in particular birds to sit.

### BRIEF DESCRIPTION OF THE DRAWINGS

The invention and embodiments thereof will now be further elucidated by means of Figures. In the Figures,
- Figure 1: shows a carton containing bird food;
- Figure 2: shows various ways to implement a weakened zone in a sidewall of a carton;
- Figure 3: shows a further carton;
- Figure 4: shows another carton with an elongated U-shaped element; and
- Figure 5: shows yet a further carton.

### DESCRIPTION OF PREFERRED EMBODIMENTS

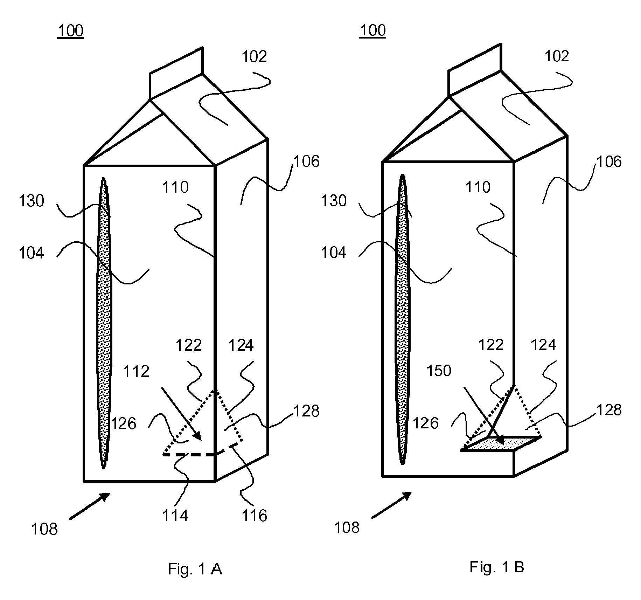

Figure 1A and Figure 1B disclose a rectangular carton 100 as an embodiment of the container according to the invention. The carton 100 comprises a top part 102 at the top of the carton 100, a first sidewall 104, a second sidewall 106 and a bottom part 108 at the bottom of the carton 100. The carton 100 also comprises a third sidewall and a fourth sidewall (not shown). In other embodiments, the carton may comprise more or less sidewalls and/or a top part integrated with sidewalls resulting in for example a triangular or curved top part, giving the carton 100 any desired form without departing from the scope of the invention. It is highly preferred that the carton 100 can be properly closed and preferably sealed to preserve freshness of its contents. Contents may even be provided in a sealed bag provided in a closed carton.

Though the word carton will be used throughout the description, it will be apparent to a person skilled in the art that the invention may also be embodied in other materials, including, but not limited to, metal, fabric, either woven or non-woven, or any kind of plastic or a combination thereof. The carton 100 is depicted as a milk carton, though other forms can be envisaged as well, like a cylindrical form, a rectangular form with a flat top or a round top or any other form.

Preferably, the carton 100 is made of carton clad with a thin film of plastic material, preferably polyethylene. This film may be provided on the inside of the carton 100, on the outside of the carton 100, or both. This makes the carton 100 weather resistant and therefore suitable for outdoor use. The carton 100 is suited for animal food in particles, like seeds, pressed pellets or other particles, preferably in dry form. The carton 100 is particularly suited for bird food, preferably in the form of seeds. To determine in a convenient way the amount of animal food in the carton 100, a transparent area 130 is provided over a substantial part of the height of the carton 100. This is preferably established by providing a cut-out in the carton 100 and by placing a translucent or transparent plastic film over the cut-out. The film can be placed either outside the carton 100, inside the carton 100 or both.

At a lower part of the carton 100 and in particular at a lower part of the first sidewall 104 and a lower part of the second sidewall 106, a tearable weakened area is provided in the form of a perforated line 112. The perforated line 112 is provided in a lower part of the carton 100, so near the bottom part 108 of the carton 100. In particular, the perforated line 112 is provided in the lower quarter of carton 100. Preferably, the perforated line 112 is provided between 0,5 cm and 2 cm above the bottom part 108. Not so much the distance from the top part 102 of the carton 100 to the perforated line 112 is of importance, but the distance between the bottom part 108 and the perforated line 112. This because, as will become more apparent from the description to follow, animals are intended to take animal food from an opening that may be provided by means of the perforated line 112. Animals should be enabled to empty the container 100 via that opening.

Perforations may be provided in a on-dimensional way with for example an intermitted line or dots, but also by means of a two-dimensional cut pattern. A first perforated line part 114 is provided on the first sidewall 104 and a second scored line part 116 is provided on the second sidewall 106. The first perforated line part 114 and the second perforated line part 116 meet in a vertical corner 110 where the first sidewall 104 and the second sidewall 106 meet. The perforated line 112 is preferably linear and horizontally located. Variations are possible by providing a curved line, either upwardly curved or downwardly curved. Alternatively or additionally, two linear line parts may be provided as discussed, both being diagonally oriented to form a V-shaped or inverse V-shaped perforated line.

The perforations of the perforated line 112 can be either full perforations through the first sidewall 104 and the second sidewall 106 of the carton 100 or blind perforations that do not fully pierce the sidewalls. Where the walls of the carton 100 are clad with a plastic film, other options are to only perforate the carton and not the film, to fully perforate the film on one side, followed by a blind or full perforation of the carton 100, leaving the film on another side intact. A person skilled in the art will appreciate that also other options are available, including, but limited to a combination of options indicated before.

From opposite ends of the perforated line 112, a first scored line 122 and a second scored line 124 extend upwards. The first scored line 122 and the second scored line 124 meet at the vertical corner 110. The vertical corner 110 is preferably a corner of 90°, though other angles are envisageable as well, in particular for a container comprising three or more than four sidewalls. After tearing the perforated line 112, a first triangular wall part 126 that is part of the first sidewall 104 and a second triangular wall part 128 that is part of the second sidewall 106 can be folded inwardly in the container 100 over the first scored line 122 and the second scored line 124. This action can also be performed without the scored lines; the scored lines make performing this action more convenient. Alternatively, a part of the carton 100 located below the perforated line 112 may be folded outwardly to created a foraging platform.

Folding back the flap formed by the first triangular wall part 126 and the second triangular wall part 128 results in an opening 150 near the bottom part 108 of the carton 100. With the carton 100 filled with for example bird seed, the opening 150 can act as a foraging zone for birds. So by tearing the weakened part in the carton 100 and folding a part of the first sidewall 104 adjacent to and in particular above the weakened zone and a part of the second sidewall 106 adjacent to and in particular above the weakened zone inwardly in the carton 100, a foraging zone for animals is formed. By virtue of friction between animal food particles themselves and between animal food particles and the walls of the carton 100 and by virtue of the inwardly folded first triangular wall part 126 and second triangular wall part 128, only a small amount of food is provided in the opening 150 and not all animal food will flow out of the opening 150 at once.

Alternatively, a part of the carton 100 located below the perforated line 112 may be folded outwardly to created a foraging platform. This construction will require additional material for construction the carton 100 and in particular the section to be folded outwardly.

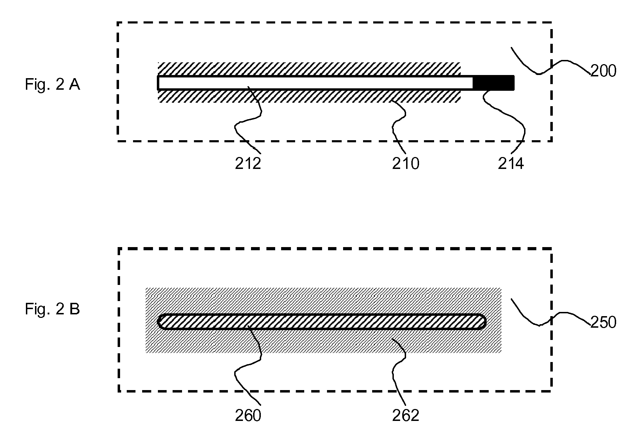

Figure 2 A shows a first variation on providing a tearable weakened zone that may be used instead of a perforated line or a perforated line only. Figure 2 A shows a wall part 200, a weakened zone 210, a strip 212 and a tab 214 connected to the strip 212. The weakened zone 210 may be weakened by perforations as discussed earlier, but also by scoring or providing another material as will be discussed later - or a combination thereof, possibly with other options. Over the weak zone 210, a strip 212 is provided with a tab 214 connected thereto. The material of the strip 212 is stronger than that of the weakened zone 210. The strip 212 is attached to the wall part 200, preferably by means of glue or another adhesive material. By pulling the tab 214, the weakened zone 210 is torn as it is attached to the strip 212 that is pulled by pulling the tab 214.

In one embodiment, the strip 212 is provided on the weakened zone 210 on another side of the wall part 200 than where the tab 214 provided. The tab 214 is provided on the outside of a carton of which the wall part 200 forms part. By pulling the tab 214, the strip 212 is pulled through the weakened zone 210 as the material of the strip 212 is stronger than the material of the weakened zone 210, thus creating an opening. As the tab and the strip are connected, a part of the strip 212 may be located outside the container and/or a part of the tab 214 may be located inside the container. The tab 214 may be formed integrally with the strip 212. In a variation, the weakened zone 210 is not so much weakened by any processing of the material of the container itself, like perforating or scoring, but merely by applying the strip 212. In particular when the material of the strip 212 is stronger than the material of the wall part 200, the strip 212 is pulled through the wall part 200 at the location where the strip 212 is provided, thus tearing the wall part 200 only at the location of the strip 212.

Figure 2 B shows a wall part 250 comprising a cut-out 260 as a weakened zone. The cut-out 260 is closed by a film 262 that is provided on the inside or outside of the cart on 100. The material of the film is weaker than the material of the wall part 250. For example, the film 262 is polyethylene, whereas the material of the wall part 250 is carton, either clad with a thin film or not, as discussed before. As the material of the film 262 is weaker than the material of the wall part 250, the file 262 can be easily cut or torn at the location of the cut-out 260, thus creating a cut line. As to cut or torn in the previous sentence, it is stipulated that in the broader scope of the invention and embodiments thereof, torn is intended to comprise cut. Subsequently, an opening may be created in the wall part as discussed with Figure 1 A and Figure 1 B or in another way to create a foraging zone. In yet another embodiment, the film 262 is located at the outside of the wall part 250 of the carton and the film 262 is torn by tearing the film 262 off the wall pert 250, thus creating an opening by exposing the cut-out 260.

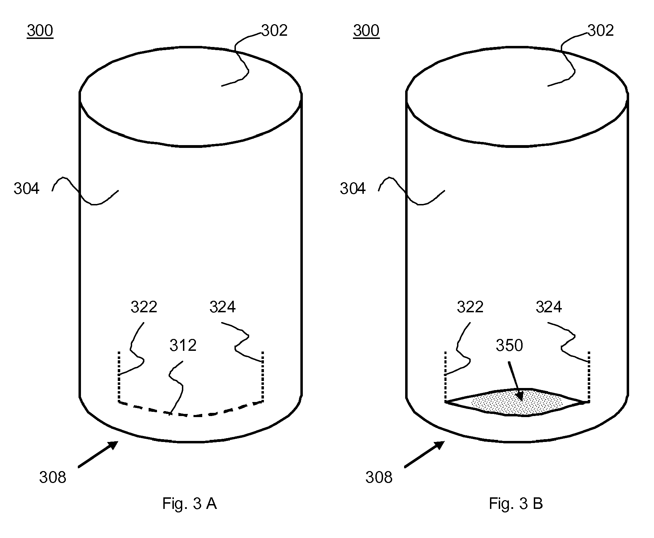

Figure 3 A and Figure 3 B show a cylindrical carton 300 as another embodiment of the container according to the invention. The carton 300 comprises a top part 302, a sidewall 304 and a bottom part 308. The sidewall comprises a perforated line 312 as a weakened zone, with a first scored line 322 extending upwardly from a first end of the perforated line 312 and a second scored line 324 extending upwardly from a second end of the perforated line 312, the first end being opposite to the second end. By tearing the perforated line and subsequently pushing a part of the sidewall 304 located above the perforated line 312 inwardly in the carton 300, an opening 350 as a foraging area is created. The top part 302 may be provided as a lid for filling the container 300.

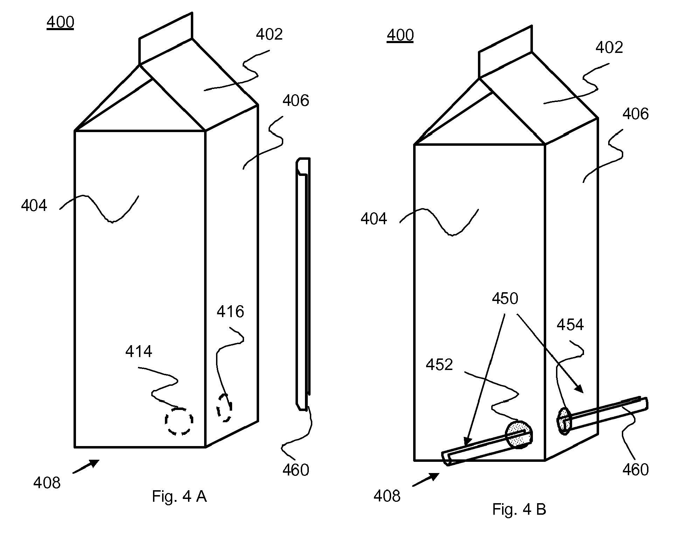

Figure 4 A and Figure 4 B show a rectangular carton 400 as a further embodiment of the container according to the invention. The carton 400 comprises a top part 402, a first side wall 404, a second sidewall 406 and a bottom part 408. The first sidewall 404 comprises a first curved and in particular circular perforated line 414 as a weakened zone. The second sidewall 406 comprises a second curved and in particular circular perforated line 416 as a weakened zone. The carton 400 is preferably provided with an elongated U-shaped profile 460 as an elongated gutter element.

Before use, the first perforated line 414 is torn or cut forming a first opening 452 and the second perforated line 416 is torn or cut forming a second opening 454. With the carton 400 filled with for example bird seed, the first opening 452 and the second opening 454 form foraging areas for birds. Foraging can be made more convenient by inserting the U-shaped profile 460 in the first opening 452 and the second opening 454, resulting in the U-shaped element 460 tunnelling through the carton 400. This results in a gutter 450 as a foraging zone, enabling bird seed to flow onto the gutter 450. In this setting, the U-shaped element 460 not only provides a foraging area, but also a place for birds to sit on while foraging.

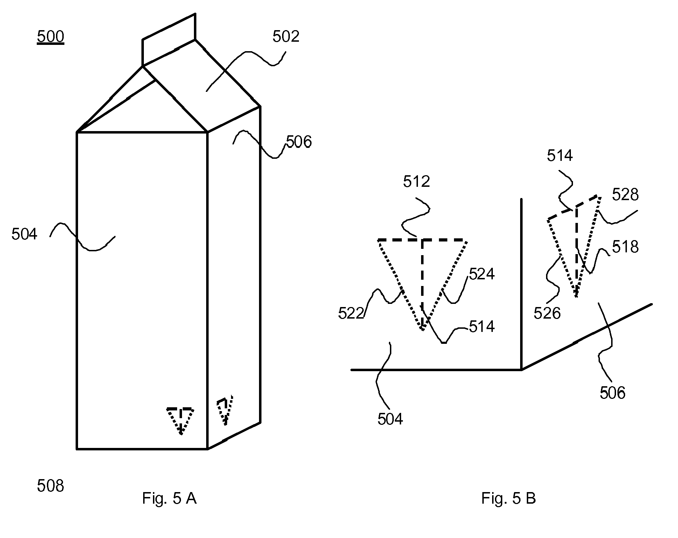

Figure 5 A shows a carton 500 as yet another embodiment of the container according to the invention. The carton 500 comprises a top part 502, a first sidewall 504, a second sidewall 506 and a bottom part 508. Figure 5 B shows a close-up view of a lower part of the carton 500. At the lower part of the carton 500, a first perforated line 512 and a second perforated line 514 are provided in the first sidewall 504 and a third perforated line 516 and a fourth perforated line 518 are provided in the second sidewall 506. The first perforated line 512 and the second perforated line 514 form a T figure, with the first perforated line 512 as a horizontal bar and the second perforated line as a vertical bar. This applies as well to the third perforated line 516 and the fourth perforated line 518, respectively.

On the first sidewall 504, a first scored line 522 and a second scored line 524 are provided from opposite ends of the first perforated line 512 to the bottom of the second perforated line 514. On the second sidewall 504, a third scored line 526 and a fourth scored line 528 are provided from opposite ends of the third perforated line 516 to the bottom of the fourth perforated line 518. By tearing the perforated lines and folding the flaps thus created either inwardly in or outwardly from the carton 500, V-shaped openings are created. These V-shaped openings can act as foraging areas. Additionally, these V-shaped openings enable an elongated V-profile as a gutter element to be inserted in both V-shaped openings. The V-shaped profile is, with the carton 500 filled with bird seed, in this way arranged to acts as a foraging area for birds.

Other setups to create V-shaped openings can be envisaged as well, for example by replacing the second scored line 524 by a perforated line and omitting the second perforated line 514. Important to take into account is that one or more folding flaps, created by tearing weakened zones, do not obstruct seeds to flow in a gutter element.

The various cartons shown thus far are preferably created from a broadsheet and folded and glued together to form the applicable carton.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa.

In the description above, it will be understood that when an element such as layer, region or substrate is referred to as being "on" or "onto" another element, the element is either directly on the other element, or intervening elements may also be present.

Furthermore, the invention may also be embodied with less components than provided in the embodiments described here, wherein one component carries out multiple functions. Just as well may the invention be embodied using more elements than depicted in Figure 1, wherein functions carried out by one component in the embodiment provided are distributed over multiple components.

A person skilled in the art will readily appreciate that various parameters disclosed in the description may be modified and that various embodiments disclosed and/or claimed may be combined without departing from the scope of the invention.

It is stipulated that the reference signs in the claims do not limit the scope of the claims, but are merely inserted to enhance the legibility of the claims.

This patent application claims priority of Dutch patent application which is incorporated herein by reference.

## Claims

1. Container for containing animal food in particles comprising
a) a top part at the top of the container;
b) a first sidewall at the side of the container; and
c) a bottom part at the bottom of the container;
the first sidewall comprising a first tearable weakened zone near the bottom part enabling creating a foraging zone for animals to take food from the container by tearing the first tearable weakened zone.

2. Container according to claim 1, wherein the container is arranged to create the foraging zone by folding a part of the first sidewall adjacent to the tearable weakened zone inwardly in the container.

3. Container according to claim 2, wherein the part of the first sidewall adjacent to the tearable weakened zone is located above the tearable weakened zone.

4. Container according to claim 1, further comprising a second sidewall adjacent to the first sidewall establishing a substantially vertically oriented corner between the first sidewall and the second sidewall, wherein the first tearable weakened zone is partially located on the first sidewall and partially located on the second sidewall.

5. Container according to claim 4, further comprising a first scored line and a second scored line extending upwardly from opposite sides of the first tearable weakened zone wherein the first scored line and the second scored line meet at the corner.

6. Container according to claim 1, wherein the first tearable weakened zone comprises at least one of the following:
a) a perforated line
b) a scored line
c) an opening in the first sidewall covered with a second material that is weaker than a first material of the first sidewall located around the opening.

7. Container according to claim 1, wherein the first tearable weakened zone is provided with a strip comprising a material that is stronger than the material of the first sidewall at the location of the first tearable weakened zone, wherein the first tearable weakened zone can be torn torn by pulling the strip.

8. Container according to claim 7, further comprising a tab connected to the strip, wherein the strip is substantially located inside the container and the tab is substantially located outside the container.

9. Container according to claim 1, further comprising a first scored line and a second scored line extending upwardly from opposite sides of the first tearable weakened zone.

10. Container according to claim 1, wherein the first tearable weakened zone has at least one of the following forms:
a) a substantially linear line;
b) a curved line;
c) a surface having a curved circumference.
d) a V-shape; or
e) a combination of the above.

11. Container according to claim 1, further comprising a second tearable weakened zone near the bottom part.

12. Broadsheet for manufacturing the container according to any of the preceding claims.

13. Kit of parts comprising:
a) the container according to claim 11; and
b) an elongated gutter element;
wherein the first tearable weakened zone and the second weakened zone are arranged to receive the elongated gutter element, the elongated gutter element tunnelling through the container
